# EUROPEAN PATENT APPLICATION

(11) **EP 3 345 787 A1**
(43) Date of publication of application: **11.07.2018**
(21) Application number: 18150634.6
(22) Date of filing: 08.01.2018
(51) Int. Cl.: B60P 3/077

(54) **TRANSVERSE MEMBER FOR THE LOADING DECK OF A VEHICLE TRANSPORTER**

(30) Priority: 10.01.2017 IT 201700001791
(71) Applicant: Officina Meccanica Migliore Livio, 10026 Santena (Torino) (IT)
(72) Inventor: MIGLIORE, Livio, I-10026 Santena (Torino) (IT)
(74) Representative: Buzzi, Franco

(57) **Abstract**

Transverse member for the loading deck of a vehicle transporter comprising an elongated box-like body (1) from whose end walls (4, 5) respectively fixed and movable engagement members (7, 8) project. The movable engagement member is constituted by a releasable latch (8) biased by a spring (9) whose removal from the box-like body (1) is prevented by a bolt (14) which abuts against the corresponding end wall (5) of the box-like body (1) in the advanced position of the latch (8).

## Description

### Field of the invention

The present invention generally regards vehicle transporters and in particular it regards a loading deck made up of removable transverse members. Such transverse members typically comprise an elongated box-like body formed at the upper part with apertures for engaging a device for stopping vehicle wheels, and provided - at the ends thereof - with respectively fixed and movable members for engagement to the vehicle transporter, which enable the quick fitting and removal of the transverse member.

### State of the prior art

Typically, the movable engagement member of the transverse member is constituted by a releasable latch biased by a spring fitted into the box-like body and displaceable from an advanced position to a receded position relative to the box-like body, against the action of the spring. Furthermore, the transverse member is provided with means for preventing the removal of the latch from the box-like body which, in a currently applied solution, consist of springing hindering appendages integrally formed on the sides of the latch, for example obtained through laser-cutting. Once the latch has been fitted into the box-like body of the transverse member, these appendages abut, in the advanced position of the latch, against the wall of the corresponding end of the transverse member.

Besides being expensive from a construction point of view, this solution is poorly reliable due to the risk of the springing appendages breaking.

### Summary of the invention

The object of the present invention is to overcome the aforementioned drawback and provide a transverse member for the loading deck of a vehicle transporter of the type described above that is easy and economic to manufacture and capable of guaranteeing maximum safety against the risk of inadvertent exit of the latch from the body of the transverse member.

According to the invention, this object is attained due to the fact that the aforementioned inhibition means consist of a bolt formed by a screw fitted through a hole of the upper side of the box-like body and a through hole of the latch, and a nut fitted through a hole of the lower side of the box-like body and screwed with the screw. The bolt is contained in a cavity of the body of the transverse member and, in the advanced position of the latch, it abuts against the end wall of the box-like body.

Thanks to this solution idea, the manufacturing of the latch, and thus of the transverse member, is considerably simpler even considering the fact that the holes through which the screw and the nut are fitted are usually provided for on the upper side and on the lower side of the box-like body of the transverse member. Furthermore, the bolt which serves as a stop for the latch when the latter is in the advanced position is considerably more robust with respect to the aforementioned inhibition systems of the prior art, thus offering greater safety and reliability in use.

### Brief description of the drawings

The invention will now be described in detail with reference to the attached drawings, provided purely by way of non-limiting example, wherein:
- figure 1 is a schematic perspective view of a transverse member for loading decks of vehicle transporters according to the invention,
- figure 2 is a top plan view of figure 1,

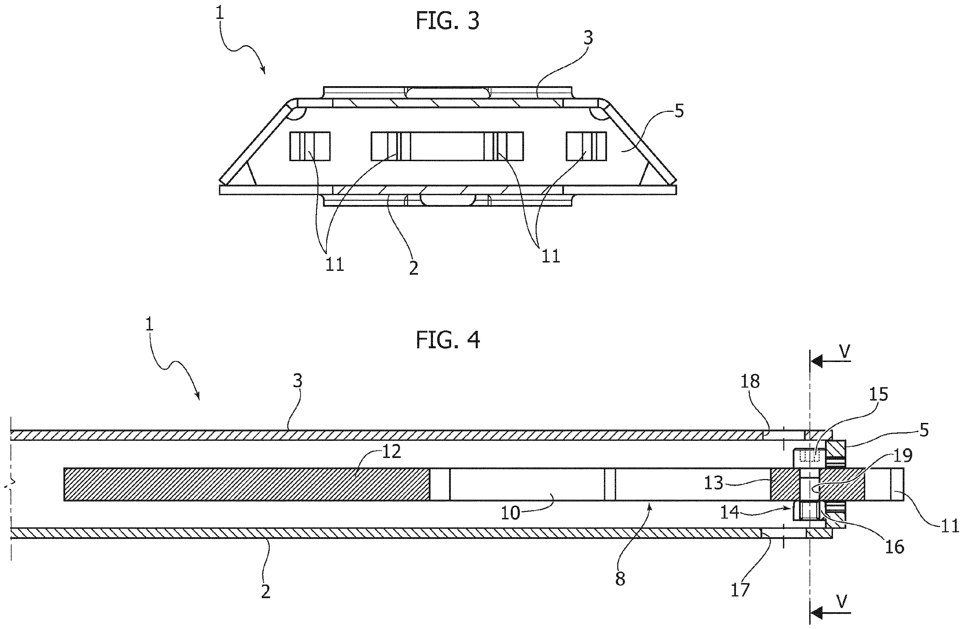

- figure 3 is a front elevational view according to arrow III of figure 2,
- figure 4 is a longitudinal sectional view according to line IV-IV of figure 2,
- figure 5 is a cross-sectional view according to line V-V of figure 4,
- figures 6 and 7 are two respectively top and bottom perspective views of the latch of the transverse member.

### Detailed description of the invention

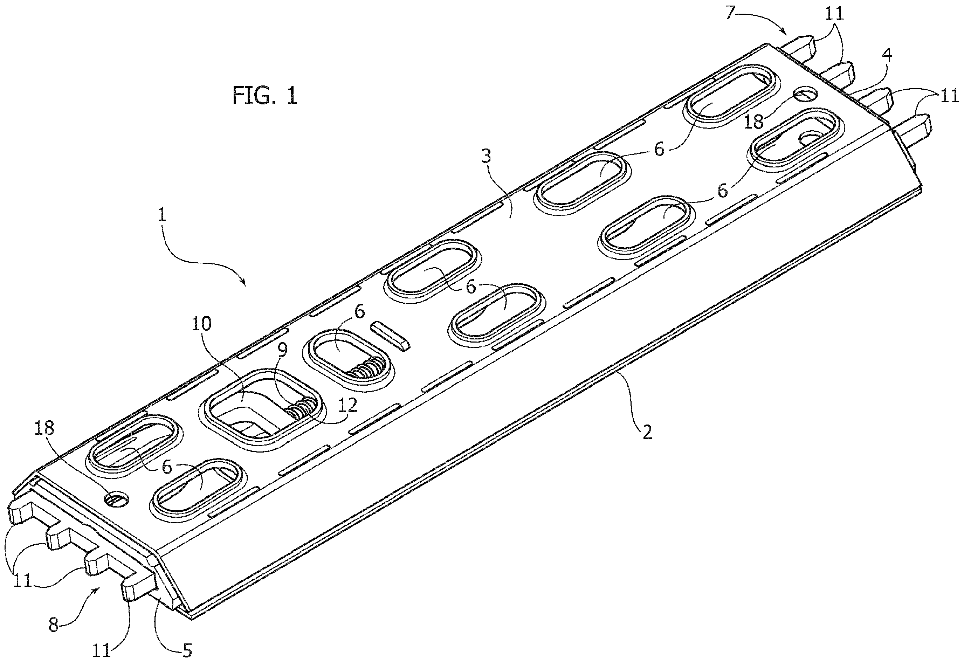

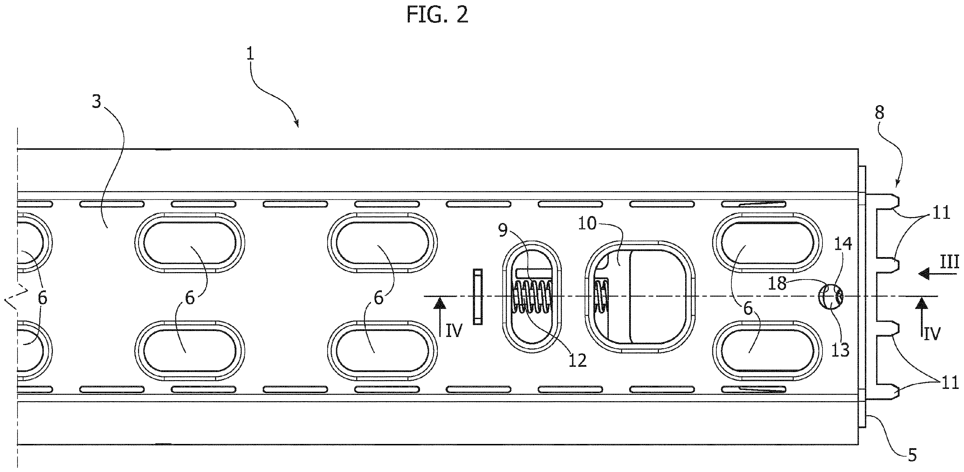

Initially referring to figures 1 and 2, the transverse member according to the invention, designated to be used to form - with similar transverse members - the loading deck of a vehicle transporter, comprises a robust elongated box-like body 1 having a base 2, an upper wall 3 and end walls 4, 5.

The upper wall 3 is formed with slot-like holes 6 for the engagement of hooks for anchoring stop devices, for vehicle wheels, per se known and not described in detail.

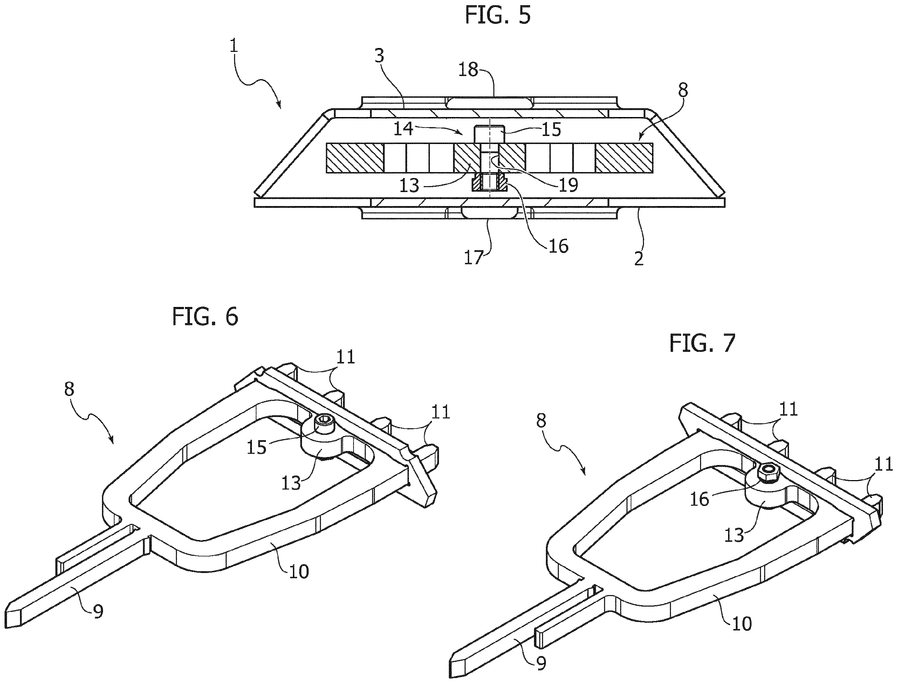

A fixed engagement member 7 designated to be engaged with the structure of the loading deck of the vehicle transporter projects from the end wall 4. A movable engagement member 8 constituted by a releasable latch, shown in detail in figures 6 and 7, permanently fitted into the box-like body 1 and displaceable from an advanced position to a receded position against the action of a compression helical spring 9, projects from the other end wall 5.

Referring further in detail to figures 6 and 7, the latch 8 is formed by a robust annular element 10 from whose one end the notches 11 traversing the end wall 5 of the transverse member 1 project for the releasable engagement with the structure of the loading deck of the vehicle transporter, and from whose opposite end a stem 12 on which the helical spring 9 is wound, extends.

The end of the latch 8 from which the notches 11 project is also formed with an inner appendage 13 having a vertical through hole 19 for the insertion of a bolt 14.

The bolt 14 comprises a screw, whose head is indicated with 15, and a nut 16. In the advanced position of the latch 8, the head of the screw 15 and the nut 16 abut - from within the transverse member 1 - against the end wall 5 of the body 1, thus preventing the inadvertent exit and unintentional removal of the latch 8 from the transverse member 1.

As regards the mounting of the latch 8, it is firstly inserted into the transverse member 1 and then aligned between the through hole 19 of the appendage 13 and a pair of holes 17, 18 respectively provided for on the lower wall 2 and on the upper wall 3 of the box-like body 1. These two holes 17, 18 are normally provided previously, hence the application of the bolt 14 does not entail any particular complications. Once the latch 8 has been mounted, it is pushed by the spring 9 to the advanced position thereof in which, as mentioned, its exit from the transverse member is prevented by the bolt 14.

Obviously, the construction details and the embodiments may widely vary with respect to what has been described and illustrated, without departing from the scope of protection of the invention as described in the claim that follows.

## Claims

1. Transverse member for the loading deck of a vehicle transporter, comprising an elongated box-like body (1) formed on the upper side (3) thereof with apertures (6) for the engagement of a stop device for vehicle wheels, said box-like body (1) being provided with end walls (4, 5) from which respectively fixed and movable members (7, 8) for engagement to the vehicle transporter project, the movable engagement member being constituted by a releasable latch (8) biased by a spring (9), fitted within the box-like body (1) and displaceable from an advanced position to a receded position relative to the box-like body (1) against the action of said spring (9), and wherein means for inhibiting the removal of the latch (8) from the box-like body (1) of the transverse member are provided, **characterised in that** said inhibition means consist of a bolt (14) formed by a screw (15) fitted through a hole (18) of the upper side (3) of the box-like body (1) and a through hole (19) of the latch (8), and a nut (16) fitted through a hole (17) of the lower side (2) of the box-like body (1), said bolt (14) abutting against the corresponding end wall (5) of the box-like body (1) in the advanced position of the latch (8).
